# EUROPEAN PATENT APPLICATION

(11) **EP 3 351 334 A1**
(43) Date of publication of application: **25.07.2018**
(21) Application number: 18150060.4
(22) Date of filing: 02.01.2018
(51) Int. Cl.: B23K 9/095, B23K 9/10, G05B 23/02

(54) **METHODS AND SYSTEMS FOR VISUALLY DISPLAYING THERMAL DUTY CYCLES**

(30) Priority: 04.01.2017 US 201715398469
(71) Applicant: Illinois Tool Works, Inc., Glenview, Illinois 60025 (US)
(72) Inventor: KNOENER, Craig S., Glenview, Illinois, 60025 (US); NIKOU, Milad P., Glenview, Illinois, 60025 (US); THIELKE, Andrew J., Glenview, Illinois, 60025 (US); MacMullen, Zach W., Glenview, Illinois, 60025 (US); TYLER, Charles A., Glenview, Illinois, 60025 (US)
(74) Representative: Trinks, Ole

(57) **Abstract**

Systems and methods are provided for visually displaying thermal duty cycles. Remaining weld time may be determined in a welding-type apparatus based on one or more parameters that correspond to at least one of: a real-time measurement corresponding to ambient conditions, a real-time measurement corresponding to power consumption, and a thermal profile of the welding apparatus. The information relating to the indication of remaining weld time may be presented to an operator of the welding-type system. The welding-type power supply may be shut off when a shut off threshold is satisfied.

## Description

### BACKGROUND

Welding has increasingly become ubiquitous. Welding can be performed in automated manner or in manual manner (*e.g.,* being performed by a human). During welding operations, equipment used may heat up. Thus, to guard against possible damage that may be cause from overheating, thermal protection may be used.

Conventional approaches for implementing and utilizing thermal protection in welding-type systems may be cumbersome, inefficient, and/or costly. Further limitations and disadvantages of conventional approaches to implementing and utilizing thermal protection in welding-type systems will become apparent to one management of skill in the art, through comparison of such approaches with some aspects of the present method and system set forth in the remainder of this disclosure with reference to the drawings.

### BRIEF SUMMARY

Aspects of the present disclosure relate to welding-type operations. More specifically, various implementations in accordance with the present disclosure are directed to visually displaying thermal duty cycles, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

FIG. 1 shows an example system that may be used for welding-type operations, in accordance with aspects of the present disclosure.
FIG. 2 shows example welding equipment in accordance with aspects of the present disclosure.
FIG. 3 depicts an example power supply supporting visual display of thermal duty cycle, in accordance with aspects of this disclosure.
FIG. 4 depicts a flowchart of an example process for visual display of thermal duty cycle, in accordance with aspects of the present disclosure.

### DETAILED DESCRIPTION

Various implementations in accordance with the present disclosure are directed to visually displaying thermal duty cycles. In this regard, many welding-type power sources have thermal protection, which is used to protect against potential damage resulting from overheating. Thermal protection may include applying, when deemed necessary, one or more protection measures, such as turning on internal fan (or similar cooling devices on), disabling weld output, powering off the system (or component(s) thereof), etc. In this regard, when particular criteria is met (*e.g.,* based on determining that the temperature has reached a predetermined maximum temperature), the thermal protection measures may be applied, and an error (*e.g.,* an over temperature) may be indicated. In some instances, the temperature of the welding-type power source may also be indicated (*e.g.,* graphically) to operators.

In some instances, thermal protection may be controlled and/or configured based on the duty cycle of the welding-type power sources. In this regard, rated duty cycle of a welding-type power source may be defined as a percentage at a given average output (*e.g*., output current), for particular duration at particular temperature (*e.g*., a 10 minute cycle in a 40°C ambient). Thus, a welding-type source rated at 40% @ 100A can be run for 4 minutes at 100A in a 40°C ambient before thermal protection measures (*e.g*., disabling weld output) is taken. However, such welding-type source (with such rated duty cycle) may run longer than 4 minutes in a cooler ambient environment and/or at lower average output current.

Accordingly, it may be desirable to determine who long the welding-type source can actually run based on the current ambient and/or use conditions, and to indicate to a operator the actual remaining time the operator may continue welding-*e.g*., at the given average current and ambient temperature, while welding; or better yet, before making a weld.

A welding-type apparatus may comprise a welding-type power supply to provide welding-type power; an output device to provide information relating to the welding-type power supply, the information may comprise an indication of remaining weld time until the welding-type power supply is shut off; and a control circuit that may be configured to determine the remaining weld time based on one or more parameters, the one or more parameters corresponding to at least one of: a real-time measurement corresponding to ambient conditions, a real-time measurement corresponding to power consumption, or a thermal profile of the welding-type apparatus; provide information relating to the indication of remaining weld time; and to apply protection measures (*e.g.,* shutting off the welding-type power supply) when a corresponding condition is met (*e.g.,* shut off threshold is satisfied).

In an example implementation, the welding-type apparatus may also comprise an ambient measurement sensor for measuring one or more ambient conditions. For example, ambient conditions may comprise ambient temperature, and the ambient measurement device may comprise thermistor.

In an example implementation, the welding-type apparatus may also comprise a power measurement circuit for measuring power consumed during welding-type operations. The power measurement device may measure power consumption based on average output weld current or RMS output weld current. The power measurement device may approximate average output weld current or RMS output weld current based on information provided by a operator. The information provided by the operator may comprise, for current controlled process, one or more of: material type, material diameter, electrode type, electrode diameter, or set point average output current. The information provided by the operator may comprise, for a voltage controlled process, one or more of: material type, material thickness, wire type, wire diameter, voltage set point, or wire speed set point, the control circuit configured to approximate the average output weld current based on previous welds.

In an example implementation, the welding-type apparatus may also comprise a operator input device, and the control circuit may be configured to determine the remaining weld time based on input from the operator input device.

In an example implementation, the welding-type apparatus may also comprise a storage device to store the thermal profile, where the thermal profile may be set or adjusted based on design data of the welding-type apparatus.

Implementations in accordance with the present disclosure offer the advantage of presenting (*e.g.,* visually) the time an operator can weld for a given ambient temperature and welding-type-type source configuration. As the ambient or welding-type source configuration changes, the time indicator adjusts accordingly.

Thus, the operator may approximate how much time he needs to compete a weld and compare it to what the welder is indicating. This allows an operator to effectually use a limited duty cycle welding-type source, or give the operator confidence that he/she "has enough welder for the job".

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "example" means serving as a non-limiting example, instance, or illustration. As utilized herein, the terms "*e.g.* and for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (*e.g.,* by a user-configurable setting, factory trim, etc.).

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (*e.g.,* engines, generators, etc.) and/or power conversion circuitry to convert primary power (*e.g.,* engine-driven power generation, mains power, etc.) to welding-type power.

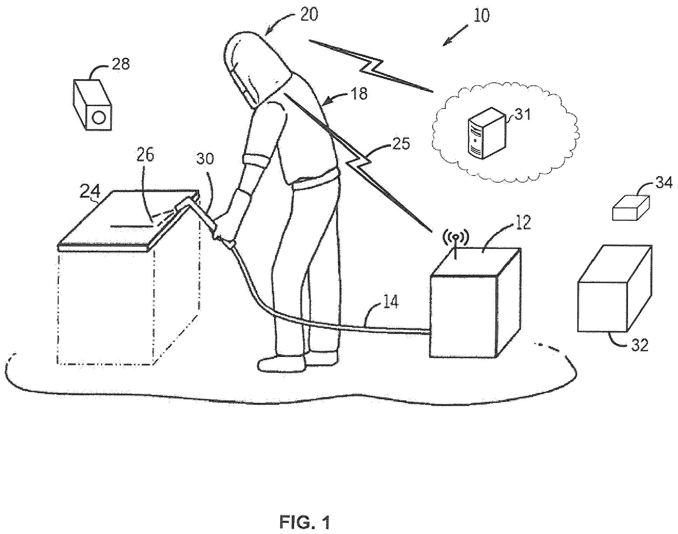

FIG. 1 shows an example system that may be used for welding-type operations, in accordance with aspects of this disclosure.

In this regard, "welding-type" operations may comprise operations in accordance with any known welding technique, including flame welding techniques such as oxy-fuel welding, electric welding techniques such as shielded metal arc welding (i.e., stick welding), metal inert gas welding (MIG), tungsten inert gas welding (TIG), resistance welding, as well as gouging (*e.g.,* carbon arc gouging), cutting (*e.g.,* plasma cutting), brazing, induction heating, soldering, and/or the like.

Referring to FIG. 1, there is shown an example welding-type arrangement 10 in which an operator 18 is wearing welding headwear 20 and welding a workpiece 24 using a torch 30 to which power is delivered by equipment 12 via a conduit 14, with weld monitoring equipment 28, which may be available for use in monitoring welding operations. The equipment 12 may comprise a power source, optionally a source of an inert shield gas and, where wire/filler material is to be provided automatically, a wire feeder. Further, in some instances an engine 32 may be used to drive equipment or components used during welding operations. For example, the engine 32 may drive generators, power sources, etc. used during welding operations.

The welding-type arrangement 10 of FIG. 1 may be configured to form a weld joint by any known welding-type technique.

Optionally in any implementation, the welding equipment 12 may be arc welding equipment that provides a direct current (DC) or alternating current (AC) to a consumable or non-consumable electrode 16 of a torch 30. The electrode 16 delivers the current to the point of welding on the workpiece 24. In the welding-type arrangement 10, the operator 18 controls the location and operation of the electrode 16 by manipulating the torch 30 and triggering the starting and stopping of the current flow. When current is flowing, an arc 26 is developed between the electrode and the workpiece 24. The conduit 14 and the electrode 16 thus deliver current and voltage sufficient to create the electric arc 26 between the electrode 16 and the workpiece. The arc 26 locally melts the workpiece 24 and welding wire or rod supplied to the weld joint (the electrode 16 in the case of a consumable electrode or a separate wire or rod in the case of a non-consumable electrode) at the point of welding between electrode 16 and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (*e.g.,* by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (*e.g.,* based on analysis thereof) in monitoring and optimizing operations of these engines. The collection and use of such data may be performed telematically-that is, the data may be collected locally, subjected to at least some processing locally (*e.g*., formatting, etc.), and then may be communicated to remote management entities (*e.g*., centralized management locations, engine providers, etc.), using wireless technologies (*e.g.,* cellular, satellite, etc.).

In various example implementations, a dedicated controller (*e.g*., shown as element 34 in FIG. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The interfacing (or obtaining data) may be done via analog sensors and/or via electronic engine control unit (ECU) if one is present. Further, the controller 34 may be operable to track or obtain welding related data (*e.g.,* from weld monitoring equipment 28, from equipment 12, etc.). The controller 34 may then transmit the data (*e.g.,* both engine related and weld related data), such as to facilitate remote monitoring and/or management, by way of wireless communications. In particular, this may be done by use of cellular and or satellite telematics hardware, for example.

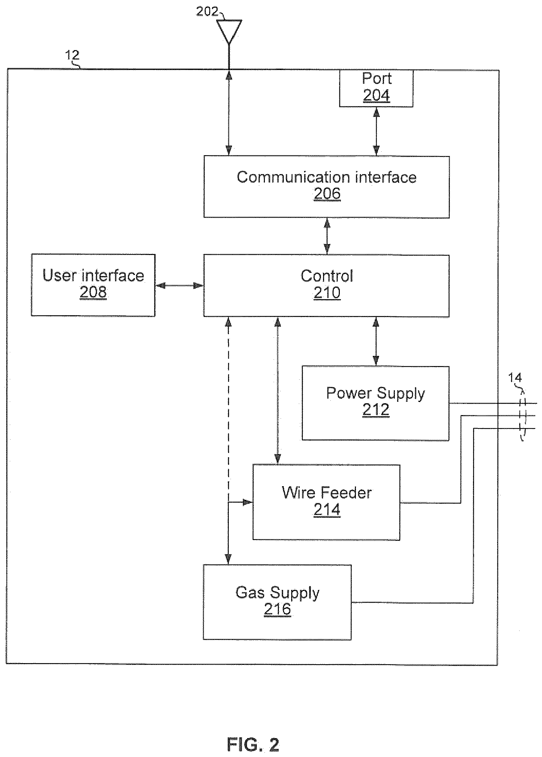

FIG. 2 shows example welding equipment in accordance with aspects of this disclosure. The equipment 12 of FIG. 2 comprises an antenna 202, a communication port 204, communication interface circuitry 206, user interface module 208, control circuitry 210, power supply circuitry 212, wire feeder module 214, and gas supply module 216.

The antenna 202 may be any type of antenna suited for the frequencies, power levels, etc. used by the communication link 25.

The communication port 204 may comprise, for example, an Ethernet over twisted pair port, a USB port, an HDMI port, a passive optical network (PON) port, and/or any other suitable port for interfacing with a wired or optical cable.

The communication interface circuitry 206 is operable to interface the control circuitry 210 to the antenna 202 and/or port 204 for transmit and receive operations. For transmit, the communication interface 206 may receive data from the control circuitry 210 and packetize the data and convert the data to physical layer signals in accordance with protocols in use on the communication link 25. For receive, the communication interface may receive physical layer signals via the antenna 202 or port 204, recover data from the received physical layer signals (demodulate, decode, etc.), and provide the data to control circuitry 210.

The user interface module 208 may comprise electromechanical interface components (*e.g.,* screen, speakers, microphone, buttons, touchscreen, etc.) and associated drive circuitry. The user interface 208 may generate electrical signals in response to user input (*e.g.,* screen touches, button presses, voice commands, etc.). Driver circuitry of the user interface module 208 may condition (*e.g.,* amplify, digitize, etc.) the signals and them to the control circuitry 210. The user interface 208 may generate audible, visual, and/or tactile output (*e.g.,* via speakers, a display, and/or motors/actuators/servos/etc.) in response to signals from the control circuitry 210.

The control circuitry 210 comprises circuitry (*e.g.,* a microcontroller and memory) operable to process data from the communication interface 206, the user interface 208, the power supply 212, the wire feeder 214, and/or the gas supply 216; and to output data and/or control signals to the communication interface 206, the user interface 208, the power supply 212, the wire feeder 214, and/or the gas supply 216.

The power supply circuitry 212 comprises circuitry for generating power to be delivered to a welding electrode via conduit 14. The power supply circuitry 212 may comprise, for example, one or more voltage regulators, current regulators, inverters, and/or the like. The voltage and/or current output by the power supply circuitry 212 may be controlled by a control signal from the control circuitry 210. The power supply circuitry 212 may also comprise circuitry for reporting the present current and/or voltage to the control circuitry 210. In an example implementation, the power supply circuitry 212 may comprise circuitry for measuring the voltage and/or current on the conduit 14 (at either or both ends of the conduit 14) such that reported voltage and/or current is actual and not simply an expected value based on calibration.

The wire feeder module 214 is configured to deliver a consumable wire electrode 16 to the weld joint. The wire feeder 214 may comprise, for example, a spool for holding the wire, an actuator for pulling wire off the spool to deliver to the weld joint, and circuitry for controlling the rate at which the actuator delivers the wire. The actuator may be controlled based on a control signal from the control circuitry 210. The wire feeder module 214 may also comprise circuitry for reporting the present wire speed and/or amount of wire remaining to the control circuitry 210. In an example implementation, the wire feeder module 214 may comprise circuitry and/or mechanical components for measuring the wire speed, such that reported speed is an actual value and not simply an expected value based on calibration.

The gas supply module 216 is configured to provide shielding gas via conduit 14 for use during the welding process. The gas supply module 216 may comprise an electrically controlled valve for controlling the rate of gas flow. The valve may be controlled by a control signal from control circuitry 210 (which may be routed through the wire feeder 214 or come directly from the control 210 as indicated by the dashed line). The gas supply module 216 may also comprise circuitry for reporting the present gas flow rate to the control circuitry 210. In an example implementation, the gas supply module 216 may comprise circuitry and/or mechanical components for measuring the gas flow rate such that reported flow rate is actual and not simply an expected value based on calibration.

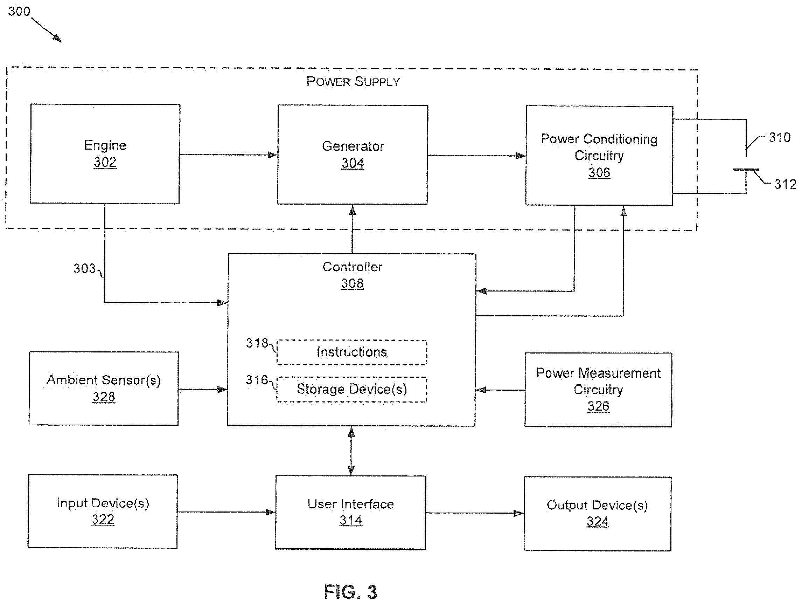

FIG. 3 depicts an example power supply supporting visual display of thermal duty cycle, in accordance with aspects of this disclosure. Shown in FIG. 3 is an example welding-type power supply 300. The welding-type power supply 300, which may be engine driven. In this regard, the example welding-type power supply 300 may comprise, for example, an engine 302, a generator 304, and power conditioning circuitry 306.

The engine 302 is mechanically coupled or linked to a rotor of the generator 304. The engine 302 may be controllable to operate at multiple speeds, such as an idle (*e.g.,* no or minimal load speed) and a maximum speed (*e.g.,* the maximum rated power of the engine 302). The engine speed may be increased and/or decreased, such as based on the load. The generator 304 generates output power based on the mechanical input from the engine 302.

The power conditioning circuitry 306 may comprise suitable circuitry for converting output power from the generator 304 to welding-type power based on a commanded welding-type output. For example, the power conditioning circuitry 306 provides current at a desired voltage to an electrode 310 and a workpiece 312 to perform a welding-type operation. The power conditioning circuitry 306 may comprise, for example, a switched mode power supply or an inverter. Power conditioning circuitry may include a direct connection from a power circuit to the output (such as to the weld studs), and/or an indirect connection through power processing circuitry such as filters, converters, transformers, rectifiers, etc.

In some instances, additional elements may be used, such as in controlling and/or supporting operations of the welding-type power supply 300 and/or functions associated therewith (*e.g.,* visual display of thermal duty cycle related information). In various example implementations, each of these additional elements may be implemented as a component of (incorporated into) the welding-type power supply 300, or as a separate, external device. As shown in FIG. 3, the additional elements may comprise a controller 308, a user interface 314, one or more input devices 322, one or more output devices 324, a power measurement circuitry 326, and one or more ambient sensors 328.

The controller 308 comprises suitable circuitry for controlling operations of the welding-type power supply 300 and/or functions associated therewith. For example, the controller 308 may receive engine speed information (via engine input 303) from the engine 302, and may receive commanded engine speed and/or commanded welding-type output-*e.g.,* as commands, obtain via the user interface 314. When the controller 308 determines that a load on the welding-type output is causing the engine speed to drop or to fail to accelerate to match the load, the controller 308 reduces the welding-type output from the commanded welding-type output to enable the engine speed to increase.

The user interface 314 comprises suitable circuitry for handling user input and/or user output, with the user input received via the one or more input devices (*e.g.,* switches, buttons, keypad, touchscreen, etc.) and the user output provided via the one or more output devices (*e.g.,* screen, audio means, etc.). For example, the user interface 314 enables selection of a commanded power level or welding-type output, such as a current or voltage level to be used for welding-type operations. The user interface 314 additionally or alternatively enables selection of one or more speeds for the engine 302 (*e.g.,* in RPM), such as an idle engine speed and/or engine speed under load.

In response to detecting a load or an increase in the load beyond the capacity of the engine 302, the controller 308 reduces the welding-type output of the power conditioning circuitry 306 from the commanded welding-type output by an amount proportional to a difference between the speed of the engine 302 and the commanded engine speed while monitoring the difference between the speed of the engine and the commanded engine speed. For example, if the engine 302 is at an idle speed when a load is added, the controller 308 decreases the welding-type output by a larger amount than if the engine decreases from the commanded speed due to an increased load on the engine. The controller 308 may monitor the difference between the speed of the engine and the commanded engine speed by comparing successive samples of the difference between the speed of the engine 302 (*e.g.,* RPM feedback, via engine input 303) and the commanded engine speed to determine whether the difference is increasing, decreasing, or remaining the same.

When the controller 308 detects a condition to cause a decrease in the welding-type output, the controller 308 continues to decrease the welding-type output until the difference between the speed of the engine 302 and the commanded engine speed begins to decrease (*e.g.,* when the engine 302 begins accelerating). As the different between the speed of the engine 302 and the commanded engine speed, the controller 308 increases the welding-type output as the until the welding-type output equals the commanded welding-type output.

The controller 308 controls the welding-type output by controlling the power conditioning circuitry 306 or by controlling a field current of the generator 304. For example, the controller 308 may decrease the welding-type output by decreasing at least one of a current output of the power conditioning circuitry 306 or a voltage output of the power conditioning circuitry 306. The controller 308 may control a switched mode power supply of the power conditioning circuitry 306 to reduce an output power and/or limit power consumed by the load connected to the power conditioning circuitry. Additionally or alternatively, the controller 308 may reduce the welding-type output by decreasing a magnitude of the field current in the generator 304 and/or increase the welding-type output by increasing the magnitude of the field current in the generator 304.

The controller 308 may include digital and/or analog circuitry, discrete or integrated circuitry, microprocessors, digital signal processors (DSPs), field programmable gate arrays (FPGAs), and/or any other type of logic circuits. The example controller 308 may be implemented using any combination of software, hardware, and/or firmware. The controller 308 executes machine readable instructions 318 which may be stored on one or more machine readable storage device(s) 316, such as volatile and/or non-volatile memory, hard drives, solid state storage, and the like.

In various example implementations in accordance with the present disclosure, the welding-type power supply 300 and related systems or devices may be configured to supporting visual display of active duty cycle information. In this regard, welding-type power sources, such as the welding-type power supply 300 shown in FIG. 3, may use thermal protection prevent and/or mitigate potential damage that may be caused from overheating. In this regard, thermal protection may comprise applying particular protective measures or actions, such as engaging cooling devices, shutting down the power sources, powering off the power sources, etc. Thermal protection (and actions performed as part thereof) may be controlled, such as based on temperature. For example, in many existing systems, bi-metal thermostats are used. In this regard, thermostats have generally replaced thermistors in use with thermal protection. Thermostats have two states, open or closed, and change state depending on the temperature. Thermistors change resistance based on temperature and can therefore be used to measure temperature.

For example, two thermostats may be used in conjunction with thermal protection, with a first thermostat used to, for example, control turning internal fan(s) on/off, and a second thermostat used to control disabling/enabling weld output. In such systems the second thermostat may be used to protect the power conversion devices, such as switches, diode, capacitors, inductors, transformers, etc., and also the insulation of these systems.

In existing systems, when it is determines that thermal protection needs to be activated (*e.g.,* when temperature reaches a predetermined maximum temperature), the weld output is disabled (and, optionally, an overheating error may be indicated). Engaging thermal protection may be done based on, for example, what's called "duty cycle." In this regard, duty cycles define and control when thermal protection measures are applied. Duty cycles of welding-type power sources may be defined based on combination of output, time, and temperature-*e.g.,* a percentage at a given output current, for particular cycle (*e.g.,* 10 minute duration), and at particular ambient temperature (*e.g.,* 40°C ambient). Thus, a welding-type power source rated at 40% at 100A would run for 4 minutes at 100A in a 40°C ambient before the output is disabled and an error (*e.g.,* overheating) is indicated. Because of real-time variations in operation and ambient conditions, however, actual run time may vary from the "set" time determined based on the predefined rated duty cycle of the system. For example, in a cooler ambient and/or at lower average output current, the welding-type power source can run longer than 4 minutes.

Accordingly, in various implementations in accordance with the present disclosure, remaining active time may be determined adaptively and/or dynamically based on operations and ambient conditions, and the remaining time may be indicated to operators, to optimize performance. In this regard, systems configured in accordance with this present disclosure may indicate to the operator the remaining time the operator may continue weld under current conditions-*e.g.,* at a given average current and current ambient temperature, while welding (or, better yet, before making a weld). For example, the indication may be configured to function and/or appear like a battery remaining time estimate in an electronic device (*e.g.,* laptop or smartphone). The indication may be presented visually-*e.g.,* displayed on a dedicated screen (*e.g.,* LCD) or via any available display means in the welding equipment.

The remaining weld time (actual time for continuing to provide weld power as calculated by adaptively adjusting the set time determined from the rated duty cycle) may be determined based on various factors and/or parameters corresponding thereto. For example, remaining weld time may be determined based on one or more of ambient conditions (*e.g.,* temperature), operation conditions (*e.g.,* the power being converted), and characteristics of the system (*e.g.,* thermal profile of the system-that is the devices and insulation it is thermally protecting).

The ambient temperature may be measured, such as via an ambient sensor 328. For example, the ambient sensor 328 may comprise a thermistor in the air flow of the incoming air, which may determine the ambient temperature based on measurement of temperature in incoming air input from the ambient environment.

The power being converted may be measured (*e.g.,* via power measurement circuity 326). In this regard, the power measurement may be made in the primary section of the converter, secondary section of the converter, or a combination of both. The power being converted may be measured or estimated based on average output weld current (*e.g.,* the power measurement circuity 326 may be configured to obtain and utilize measurement of the average output weld current). In this regard, for various welding-type power sources the average output weld current may be measured or estimated based on the information provided by the operator. For example, for current controlled process such as stick (SMAW) or TIG (GTAW) welding, the information provided by the operator may comprise material type, material diameter, electrode type, electrode diameter, set point average output current, etc. For voltage controlled process, the information may be the process, material type, material thickness, wire type, wire diameter, voltage set point, wire speed set point, etc. The average output weld current may also be estimated based on previous welds.

The thermal profile of the system may comprise information relating to the thermal characteristics of the system (*e.g.,* parameters relating to heating/cooling rates, in particular conditions, etc.). The thermal profile may be assessed (observed) during design of the system, and the design of the system may be modified based on this profile. Once the design and implementation of the system is complete, the final thermal profile may be compiled and stored (*e.g.,* into a storage device, such as one of the storage device(s) 316 or an external, dedicated storage device (not shown)). During thermal protection operations, the thermal profile (or information derived based thereon) may be read out and used for predicting thermal events.

During thermal protection operations, the various thermal related information may be obtained or generated (*e.g.,* real-time ambient temperature reading, real-time power measurement, information based on system's thermal profile), and the welding-type power source (*e.g.,* the controller 308) may estimate remaining weld time-that is the actual time the operator may continue welding.

The remaining weld time may then be indicated to the operator. The remaining weld time may be indicated to the operator visually. In the welding-type power supply 300 of FIG. 3, once the remaining welding time is determined, it may be provided to the user interface 314, which may then output it (*e.g.,* presented as visual indication, such as numerical value, percentage bar, etc.) to the user via an output device 324 (*e.g.,* an LCD screen, etc.).

In an example use scenario, assuming the welding-type power supply 300 of FIG. 3 has a rated duty cycle of 40% at 100A, if welding was being done in a 30°C environment (as measured via the ambient sensors 328) and the operator set the machine (via an input device 322) to a stick process and selected 100A, the controller 308 may estimate 5 minutes of remaining weld time, which may then be presented visually to the operator via an output device 324. As the operator turns the current set point up (via an input device 322), the remaining weld time (and thus the time indication presented via the output device 324) may be reduced. Once the operator starts welding, the time indication would decrement. Once the operator stops welding, the time indication would increment.

On or more thermal protection actions may be taken (*e.g.* shutting off the welding-type power supply 300, or at least certain components thereof) at the end of remaining time (and/or, optionally, when corresponding execution conditions are met). For example, the welding-type power supply 300 may be shut off when/if a shut off threshold (expiry of determined time, ambient temperature exceeding particular threshold, etc.).

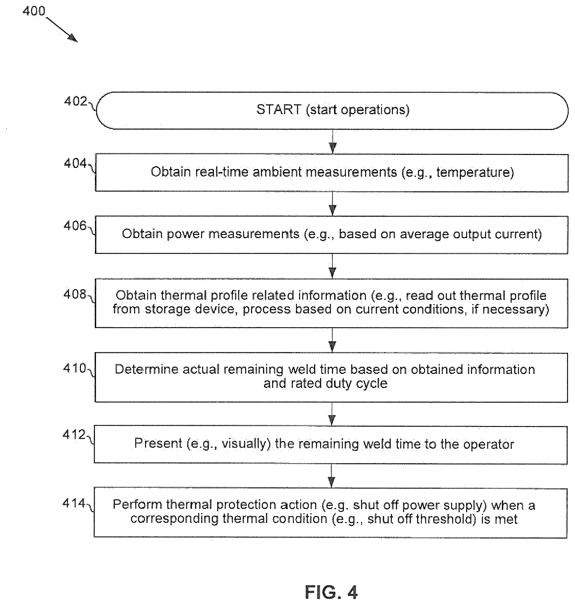

FIG. 4 depicts a flowchart of an example process for visual display of thermal duty cycle, in accordance with aspects of the present disclosure. Shown in FIG. 4 is flow chart 400, comprising a plurality of example steps (represented as blocks 402-412), for presenting (*e.g.,* visually) thermal duty cycles, such as in a suitable system (*e.g.,* the welding-type power supply 300 of FIG. 3), in accordance with the present disclosure.

After start step 402, in which welding arrangement is setup and welding operations are started, in step 404, real-time ambient measurements (*e.g.,* temperature) is obtained (*e.g.,* via ambient sensor(s) 328 in the power supply 300 of FIG. 3).

In step 406, power measurements (*e.g.,* based on average output current) are obtained (*e.g.,* via the power measurement circuitry 328 in the power supply 300 of FIG. 3).

In step 408, thermal profile related information is obtained (*e.g.,* thermal profile read from storage device 316; the thermal profile may process based on current conditions, if necessary, via the controller 308).

In step 410, actual remaining weld time is determined (*e.g.,* via the controller 308), based on obtained information and thermal duty cycle of the system.

In step 412, the determined remaining weld time is presented (*e.g.,* visually) to the operator (*e.g.,* via an output device 324 in the power supply 300 of FIG. 3).

In step 414, a thermal protection action (*e.g.* shut off power supply) is performed or taken, such as when a corresponding thermal condition (*e.g.,* shut off threshold) is met. In this regard, the thermal protection scheme implemented in the system may define multiple actions, each with corresponding execution criteria or conditions to determine when/if to take the action.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

## Claims

1. A welding-type apparatus, comprising:
- a welding-type power supply to provide welding-type power;
- an output device to present information relating to the welding-type power supply, the information comprising an indication of remaining weld time until output of the welding-type power supply is disabled, wherein the indication comprises at least one of a numerical value corresponding to remaining welding and a visual indication corresponding to remaining welding time as a portion of a maximum welding time; and
- a control circuit to:
- determine the remaining weld time based on one or more parameters, the one or more parameters corresponding to at least one of:
- a measurement corresponding to ambient conditions, power consumption, or
- a thermal profile of the welding-type apparatus;
- generate an indication of remaining weld time configured for presenting via the output device; and
- disable output of the welding-type power supply when a threshold is satisfied.

2. The welding-type apparatus of claim 1,
further comprising an ambient measurement sensor for measuring one or more ambient conditions,
wherein the ambient conditions comprise ambient temperature, and the ambient measurement device comprise thermistor.

3. The welding-type apparatus of claim 1 or 2,
further comprising a power measurement circuit for measuring power consumed during welding-type operations,
wherein the power measurement device measures power consumption based on average output weld current or root mean square (RMS) output weld current, average input weld current, RMS input weld current, average output weld voltage or RMS output weld voltage, average input weld voltage, RMS input weld voltage.

4. The welding-type apparatus of claim 3,
wherein the power measurement device approximates average output weld current or RMS output weld current based on information provided by the user.

5. The welding-type apparatus of claim 4,
wherein the information provided by the user comprises:
- for current controlled process, one or more of: material type, material diameter, electrode type, electrode diameter, or set point average output current; and
- for a voltage controlled process, one or more of: material type, material thickness, wire type, wire diameter, voltage set point, or wire speed set point, the control circuit configured to approximate the average output weld current based on previous welds.

6. The welding-type apparatus of one of the preceding claims,
wherein at least one of the measurement corresponding to ambient conditions and a measurement corresponding to the power consumption is a real-time measurement.

7. The welding-type apparatus of one of the preceding claims,
further comprising a user input device, the control circuit configured determine the remaining weld time based on input from the user input device.

8. The welding-type apparatus of one of the preceding claims,
further comprising a storage device to store the thermal profile, the thermal profile based on design data of the welding-type apparatus.

9. A non-transitory machine readable medium comprising machine readable instructions which, when executed by a processor, cause the processor to:
- determine a remaining weld time, until output of a welding-type power supply is is disabled, based on one or more parameters, the one or more parameters corresponding to at least one:
- a measurement corresponding to ambient conditions, power consumption, and
- a thermal profile of the welding-type apparatus; generate an indication of remaining weld time, wherein the indication configured for outputting via a corresponding output device, and the indication comprises at least one of a numerical value corresponding to remaining welding and a visual indication corresponding to remaining welding time as a portion of maximum welding time; and
- disable output of the welding-type power supply when a threshold is satisfied.

10. The machine readable medium of claim 9,
wherein the instructions further cause the processor to obtain measurement of one or more ambient conditions,
wherein the ambient conditions comprise ambient temperature.

11. The machine readable medium of claim 9 or 10,
wherein the instructions further cause the processor to obtain measurement of power consumed during welding-type operations,
wherein the power measurement device measures power consumption based on average output weld current or root mean square (RMS) output weld current, average input weld current, RMS input weld current, average output weld voltage or RMS output weld voltage, average input weld voltage, RMS input weld voltage,
wherein the instructions further cause the processor to approximate average output weld current based on information provided by a user.

12. The machine readable medium of claim 11,
wherein the information provided by the user comprises:
- for current controlled process, one or more of: material type, material diameter, electrode type, electrode diameter, or set point average output current; and
- for a voltage controlled process, one or more of: material type, material thickness, wire type, wire diameter, voltage set point, or wire speed set point, the control circuit configured to approximate the average output weld current based on previous welds.

13. The machine readable medium of claim 11 or 12,
wherein at least one of the measurement corresponding to ambient conditions and a measurement corresponding to the power consumption is a real-time measurement.

14. The machine readable medium of one of claims 9 to 13,
wherein the instructions further cause the processor to receive and utilize user input in configuring or controlling the determining of remaining weld time.

15. The machine readable medium of one of claims 9 to 14,
wherein the instructions further cause the processor to retrieve the thermal profile from a storage device, the thermal profile being determined and stored during design and/or implementation of the welding-type apparatus.
